# EUROPÄISCHE PATENTSCHRIFT

(11) **EP 0 375 988 B1**
(45) Veröffentlichungstag und Bekanntmachung des Hinweises auf die Patenterteilung: **08.02.1995**
(21) Anmeldenummer: 89122149.1
(22) Anmeldetag: 30.11.1989
(51) Int. Cl.: G11B 17/04, G11B 17/035

(54) **Aufnahmevorrichtung für ein Aufzeichnungs- und/oder Wiedergabegerät**
Loading device for a recording or playback apparatus
Dispositif de chargement pour un appareil d'enregistrement ou de reproduction

(30) Priorität: 27.12.1988 DE 3843991
(43) Veröffentlichungstag der Anmeldung: 04.07.1990
(73) Patentinhaber: Deutsche Thomson-Brandt GmbH, 78003 Villingen-Schwenningen (DE)
(72) Erfinder: Caspers, Johannes, D-7730 Villingen-Schwenningen (DE); Riester, Thomas, D-7730 Villingen-Schwenningen (DE)

(56) Entgegenhaltungen:
- FR-A- 2 343 307
- GB-A- 2 139 800
- US-A- 4 695 995
- PATENT ABSTRACTS OF JAPAN vol. 10, no. 26 (P-425)(2083) 31 Januar 1986,& JP-A-60 177464 (HITACHI SEISAKUSHO K.K.)
- PATENT ABSTRACTS OF JAPAN vol. 9, no. 239 (P-391)(1962) 25 September 1985,& JP-A-60 93664 (AKAI DENKI K.K.)

## Beschreibung

Die Erfindung betrifft eine Aufnahmevorrichtung für ein Aufzeichnungs- und/oder Wiedergabegerät zur Aufnahme von Platten unterschiedlichen Durchmessers, die eine Vertiefung zur Aufnahme der Platte mit dem größeren Durchmesser aufweist, deren Rand die Platte größeren Durchmessers gegen Verschieben sichert, wobei in der Mitte der Vertiefung eine Aussparung für eine absenkbare Auflage vorgesehen ist, wobei eine Platte durch Absenken der Auflage in die Abspielposition gebracht wird und wobei auf der Auflage auf dem Umfang eines gedachten Kreises, dessen Durchmesser dem Durchmesser der kleineren Platte entspricht, Stützen angeordnet sind, welche die kleinere Platte gegen Verschieben sichern und auf denen die größere Platte ruht.

CD-Spieler oder Videoplattenspieler sind z.B. mit Aufnahmevorrichtungen für den plattenförmigen Aufzeichnungsträger, die CD-Platte oder die Videoplatte, ausgestattet.

Eine CD-Platte wird zum Abspielen in einem CD-Spieler zentriert auf einen Plattenteller gedrückt und in Rotation versetzt. Die Zentrierung der CD-Platte wird durch eine Aufnahmevorrichtung erleichtert, in welche die CD-Platte eingelegt wird. Diese Aufnahmevorrichtung hat eine kreisförmige Vertiefung, deren Durchmesser an den Außendurchmesser üblicher CD-Platten derart angepaßt ist, daß die CD-Platte einerseits bis auf ein bestimmtes radiales Spiel vorzentrierbar ist, andererseits jedoch zum Abspielen frei drehbar ist.

CD-Platten geringeren Formats, sogenannte Mini-CDs, können aber ohne zusätzliche Maßnahmen nicht in der Aufnahmevorrichtung eines CD-Spielers soweit vorzentriert werden, daß sie abspielbar sind. Um Mini-CDs trotzdem in einem herkömmlichen CD-Spieler mit einer Aufnahmevorrichtung für übliche CD-Platten abspielen zu können, wird die Mini-CD in eine als Adapter dienende ringförmige Scheibe fest eingeklemmt, deren Außendurchmesser dem Außendurchmesser einer üblichen CD-Platte entspricht. Die ringförmige Scheibe wird zusammen mit der eingelegten Mini-CD in die Aufnahmevorrichtung des CD-Spielers eingelegt und läßt sich nun wie eine übliche CD-Platte abspielen.

Diese Lösung dürfte jedoch den CD-Liebhaber wenig begeistern, weil er zum Abspielen von Mini-CDs die erwähnte ringförmige Scheibe oder ähnliches Zubehör zur Anpassung an den kleineren Durchmesser benötigt.

Ein weiterer Nachteil ist darin zu sehen, daß eine Mini-CD vor dem Abspielen von Hand in der ringförmigen Scheibe festzuklemmen und nach dem Abspielen wieder heraus zu nehmen ist, um die nächste Mini-CD festklemmen zu können.

Aus der US-A 4 695 995 ist eine Aufnahmevorrichtung für ein Aufzeichnungs- und/oder Wiedergabegerät zur Aufnahme von Platten unterschiedlichen Durchmessers bekannt. In der Aufnahmevorrichtung ist eine Aussparung für eine Auflage vorgesehen, die mittels je einer an der linken und rechten Seite angeordneten Führungsschiene gesenkt und angehoben wird. Die beiden Führungsschienen an der rechten und linken Seite der Auflage erfordern eine verhältnismäßig breite Bauweise der Aufanhmevorrichtung.

Es ist daher Aufgabe der Erfindung, die Aufnahmevorrichtung eines Aufzeichnungs- und/oder Wiedergabegerätes so zu gestalten, daß ein Aufzeichnungsträger geringeren Durchmesseres ohne Zubehör und ohne zusätzliche Handgriffe in die Aufnahmevorrichtung des Aufzeichnungs- und/oder Wiedergabegerätes eingelegt werden kann.

Die Erfindung löst diese Aufgabe dadurch, daß die Auflage mittels eines Armes mit der Aufnahmevorrichtung mechanisch verbunden ist, daß der Arm drehbar an der Aufnahmevorrichtung und an der Auflage befestigt ist, daß der Arm (AR) zum Absenken der Auflage nach unten und zum Heben der Auflage nach oben gedrückt wird, und daß die Stützen mindestens drei sind.

Es zeigen
- Figur 1: ein Ausführungsbeispiel der Erfindung von oben
- Figur 2: das Ausführungsbeispiel von unten
- Figur 3: eine Seitenansicht des Ausführungsbeispiels
- Figur 4: eine Seitenansicht des Ausführungsbeispiels
- Figur 5: eine Seitenansicht des Ausführungsbeispiels
- Figur 6: eine Seitenansicht des Ausführungsbeispiels.

Anhand der Figuren wird nun die Erfindung beschrieben und erläutert.

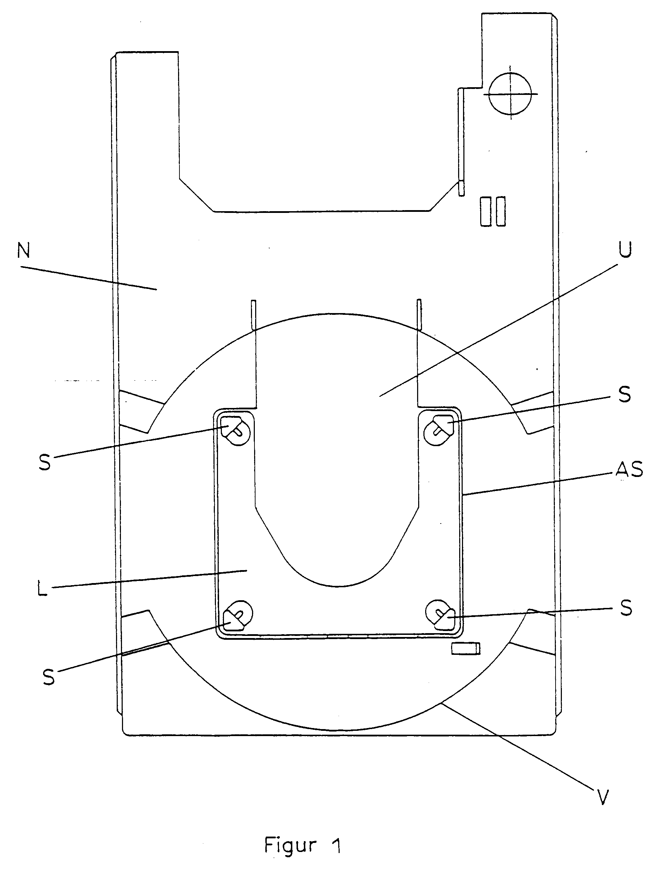

In der Figur 1 ist ein Ausführungsbeispiel der Erfindung für einen CD-Spieler von oben gezeigt. Die Aufnahmevorrichtung N weist eine kreisförmige Vertiefung V auf, in deren Mitte eine quadratförmige Aussparung AS für die quadratförmige Auflage L vorgesehen ist. Die quadratförmige Aussparung AS ist an der Rückseite offen, so daß eine etwa U-förmige Aussparung gebildet wird. Auf derselben Seite ist in der Aufnahme N ebenfalls eine etwa U-förmige Aussparung vorgesehen. Diese beiden U-förmigen Aussparungen U sind für den Plattenantrieb und die Abtastvorrichtung des CD-Spielers vorgesehen.

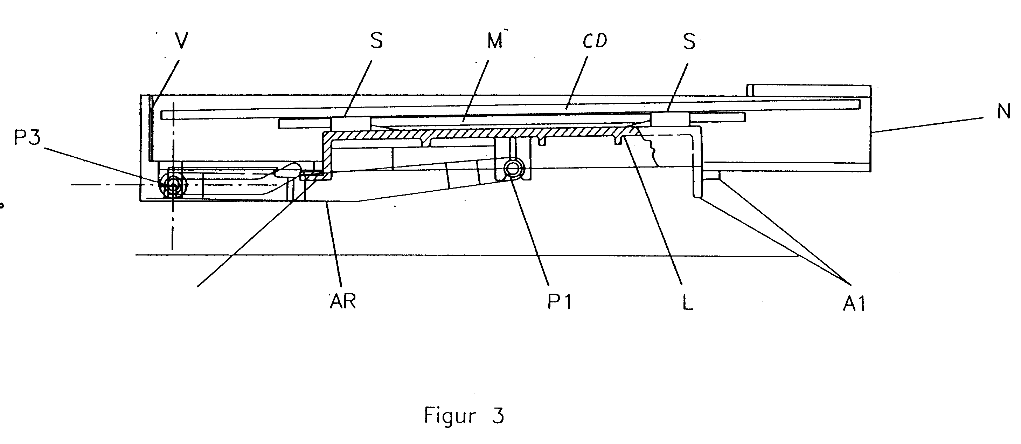

Auf der Auflage L sind auf dem Umfang eines gedachten Kreises, dessen Durchmesser dem Außendurchmesser einer Mini-CD entspricht, vier Stützen S so angeordnet, daß in jeder Ecke der Auflage L eine Stütze S steht. Eine Mini-CD wird zwischen die vier Stützen S gelegt, während eine normale CD-Platte auf den vier Stützen S ruht. Die Lage der Platten ist aus den Figuren 3 bis 5 ersichtlich.

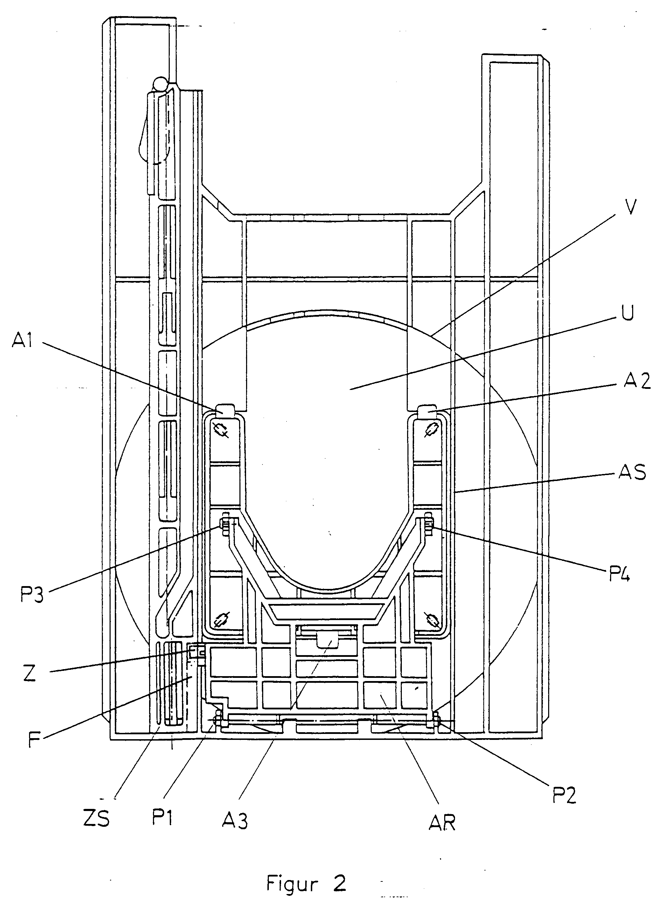

Die Figur 2 zeigt das Ausführungsbeispiel von unten. Die Auflage L ist mittels eines Armes AR mechanisch mit der Aufnahmevorrichtung N verbunden. An den Befestigungspunkten P1, P2, P3 und P4 ist der Arm AR drehbar gelagert, so daß er nach oben und unten gedrückt werden kann.

Neben der Auflage L liegt eine Zahnstange ZS mit einer Führungsnut F, in der ein Zapfen Z des Armes AR geführt wird. Durch Vorwärtsbewegen und Rückwärtsbewegen der Zahnstange ZS z.B. mittels eines von einem Elektromotor angetriebenen Zahnrades wird der Arm AR nach oben oder unten gedrückt. Nach oben hin wird die Hubbewegung durch je einen Anschlag A1 und A2 an den beiden durch die U-Form gebildeten Schenkeln und durch einen Anschlag A3 an der Vorderseite begrenzt.

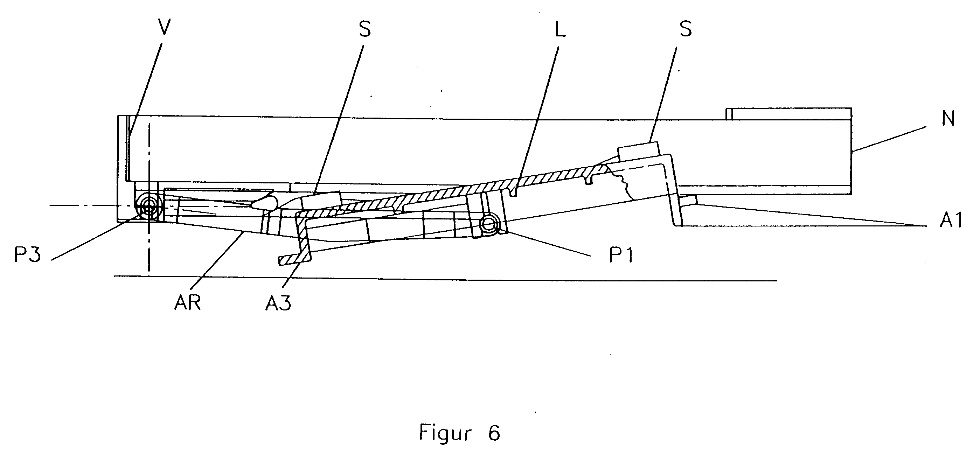

Wie die Hub- und Senkbewegung der Auflage L ablaufen, wird anhand der in den Figuren 3 bis 6 gezeigten Seitenansichten erläutert.

In der Figur 3 ist die Ladeposition der Auflage L dargestellt. Zur Veranschaulichung sind sowohl eine CD-Platte CD normaler Größe, die auf den Stützen S ruht, als auch eine Mini-CD M, die zwischen den Stützen S liegt, eingezeichnet. Im Spielbetrieb liegt entweder nur ein CD-Platte normaler Größe oder eine Mini-CD in der Aufnahmevorrichtung N. Die Anschläge A1, A2 und A3 der Auflage L stoßen an der Aufnahmevorrichtung N an.

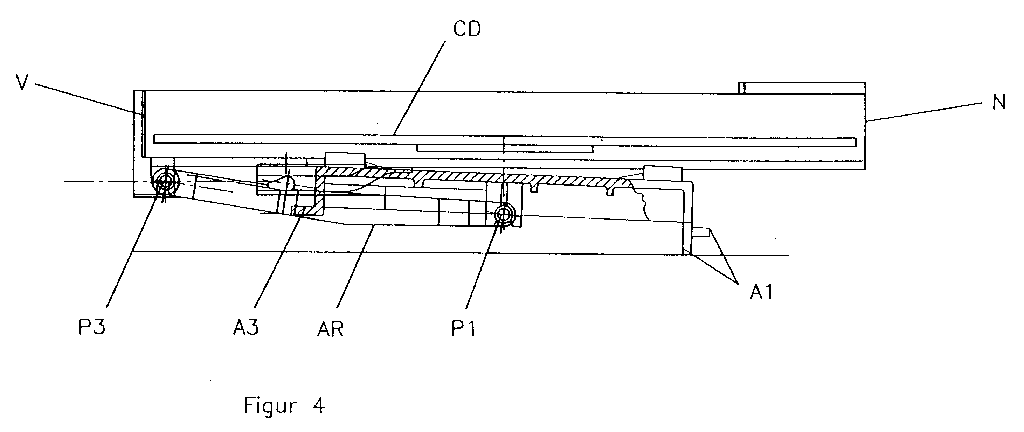

In der Figur 4 wird der Arm AR nach unten bewegt. Wegen der Reibung in den Lagerpunkten P1 und P2 dreht sich die Auflage L nicht relativ zum Arm AR. Daher stoßen zuerst die Anschläge A1 und A2 an einer Auflagefläche des Gehäuses des CD-Spielers an. Der Arm AR kann so aufgebaut sein, daß gleichzeitig mit den Anschlägen A1 und A2 der Anschlag A3 am Arm AR anstößt. Die Auflage L liegt zwar noch nicht parallel zur Aufnahmevorrichtung N, jedoch kann eine eingelegte CD-Platte CD oder Mini-CD bereits vom Plattenantrieb erfaßt und abgespielt werden.

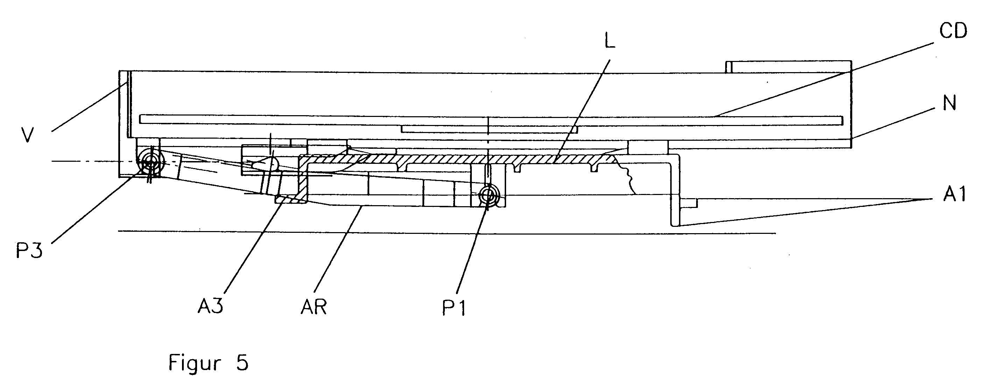

Der Arm AR kann z.B. aber auch so gestaltet sein, daß er den Anschlag A3 nicht berührt. Wenn der Arm AR weiter nach unten gedrückt wird, dreht sich die Auflage L in Pfeilrichtung um den Auflagepunkt der Anschläge A1 und A2 bis schließlich auch der Anschlag A3 an der Auflagefläche des Gehäuses aufliegt. Die eingelegte CD-Platte oder Mini-CD befindet sich nun ebenfalls in der Abspielposition. Diese Lage ist in Figur 5 gezeigt.

Das Ende der Drehbewegung des Arms AR läßt sich auch durch die Form der Führungsnut F in der Zahnstange ZS festlegen. Die Anschläge A1, A2 und A3 dienen dann nur dazu, die Auflage L in die Abspielposition zu drehen. Zur Entnahme der CD-Platte aus der Aufnahmevorrichtung N wird die Auflage L vom Arm AR angehoben. Wegen der Reibung in den Lagerpunkten P1 und P2 werden wiederum, wie in Figur 5 abgebildet ist, zuerst die Anschläge A1 und A2 an der Aufnahmevorrichtung N anstoßen. Erst durch weiteres Anheben des Armes AR wird die Auflage L soweit in Pfeilrichtung um die Verbindungsachse der Anschläge A1 und A2 gedreht, bis der Anschlag A3 ebenfalls an der Aufnahmevorrichtung N anstößt.

Ein wesentlicher Vorteil des Mechanismus zum Absenken der Auflage L ist darin zu sehen, daß der ohnehin knapp bemessene Raum in einem CD-Spieler gut ausgenutzt wird. Es ist nicht erforderlich, wegen des Arms AR, der die Auflage L mit der Aufnahme N mechanisch verbindet, die Abmessungen anderer Bauteile einzuschränken.

Die Aufnahmevorrichtung N kann z.B. als ein- und ausfahrbare Schublade ausgebildet sein. Zum Herausnehmen der eingelegten Platte und zum Einlegen einer neuen Platte wird die Schublade aus dem Gehäuse des CD-Spielers ausgefahren und anschließend zum Abspielen der eingelegten Platten wieder in das Gehäuse eingefahren.

## Patentansprüche

1. Aufnahmevorrichtung (N) für ein Aufzeichnungs- und/oder Wiedergabegerät zur Aufnahme von Platten (CD, M) unterschiedlichen Durchmessers, die eine Vertiefung (V) zur Aufnahme der Platte (CD) mit dem größeren Durchmesser aufweist, deren Rand die Platte (CD) größeren Durchmessers gegen Verschieben sichert, wobei in der Mitte der Vertiefung (V) eine Aussparung (AS) für eine absenkbare Auflage (L) vorgesehen ist, wobei eine Platte (CD, M) durch Absenken der Auflage (L) in die Abspielposition gebracht wird, und wobei auf der Auflage (L) auf dem Umfang eines gedachten Kreises, dessen Durchmesser dem Durchmesser der kleineren Platte (M) entspricht, Stützen (S) angeordnet sind, welche die kleinere Platte (M) gegen Verschieben sichern und auf denen die größere Platte (CD) ruht, **dadurch gekennzeichnet**, daß die Auflage (L) mittels eines Armes (AR) mit der Aufnahmevorrichtung (N) mechanisch verbunden ist, daß der Arm (AR) drehbar an der Aufnahmevorrichtung (N) und an der Auflage (L) befestigt ist, daß der Arm (AR) zum Absenken der Auflage (L) nach unten und zum Heben der Auflage (L) nach oben gedrückt wird, und daß die Stützen (S) mindestens drei sind.

2. Aufnahmevorrichtung nach Anspruch 1, **dadurch** **gekennzeichnet**, daß die Hub- und Senkbewegung der Auflage (L) durch Anschläge (A1, A2, A3) begrenzt wird.

3. Aufnahmevorrichtung nach Anspruch 1 oder 2, **dadurch** **gekennzeichnet**, daß ein Zapfen (Z) des Armes (AR) von einer Führungsnut (F) einer parallel zum Arm (AR) verlaufenden Zahnstange (ZS) geführt wird.

4. Aufnahmevorrichtung nach Anspruch 3, **dadurch ge****kennzeichnet**, daß die Zahnstange (ZS) mittels eines von einem Elektromotor angetriebenen Zahnrades bewegt wird.

5. Aufnahmevorrichtung nach Anspruch 1, 2, 3 oder 4, **dadurch** **gekennzeichnet**, daß in der Auflage (L) eine Aussparung (U) für den Plattenantrieb und die Abtastvorrichtung des Aufzeichnungs- und/oder Wiedergabegerätes vorgesehen ist.

6. Aufnahmevorrichtung nach Anspruch 1, 2, 3, 4 oder 5, **dadurch gekennzeichnet**, daß die Auflage (L) und die für sie in der Aufnahmevorrichtung vorgesehene Aussparung (AS) quadrat- oder kreisförmig ausgebildet sind.

7. Aufnahmevorrichtung nach Anspruch 1, 2, 3, 4, 5 oder 6, **dadurch gekennzeichnet**, daß die Aufnahmevorrichtung (N) als Schublade ausgebildet ist, die aus dem Gehäuse des Gerätes aus- und in das Gehäuse einfahrbar ist.

## Claims

1. Receiving device (N), for a recording and/or reproduction apparatus, for the reception of discs (CD, M) of different diameters, which device includes a depression (V) for receiving the disc (CD) having the greater diameter and the edge of which safeguards the disc (CD) of greater diameter from being displaced, wherein there is provided a recess (AS) in the centre of the depression (V) for a lowerable bearing surface (L), wherein a disc (CD, M) is placed in the play-back position by lowering the bearing surface (L) and wherein supports (S), which safeguard the smaller disc (M) from being displaced and upon which the larger disc (CD) rests, are arranged on the bearing surface (L) along the periphery of an imaginary circle whose diameter corresponds to the diameter of the smaller disc (M), characterised in that, the bearing surface (L) is mechanically coupled to the receiving device (N) by means of an arm (AR), that the arm (AR) is rotatably mounted on the receiving device (N) and on the bearing surface (L), that the arm (AR) is pressed downwardly for lowering the bearing surface (L) and is pressed upwardly for raising the bearing surface (L) and that there are at least three supports (S).

2. Receiving device in accordance with Claim 1, characterised in that, the lifting and lowering movement of the bearing surface (L) is limited by stops (A1, A2, A3).

3. Receiving device in accordance with Claim 1 or 2, characterised in that, a gudgeon pin (Z) of the arm (AR) is guided by a guide groove (F) of a toothed rack (ZS) that runs parallel to the arm (AR).

4. Receiving device in accordance with Claim 3, characterised in that, the toothed rack (ZS) is moved by means of a toothed gear driven by an electric motor.

5. Receiving device in accordance with any of the Claims 1, 2, 3 or 4, characterised in that, a recess (U) is provided in the bearing surface (L) for the disc drive means and the scanning device of the recording and/or reproduction apparatus.

6. Receiving device in accordance with any of the Claims 1, 2, 3, 4 or 5, characterised in that, the bearing surface (L) and the recess (AS) provided for it in the receiving device are circular or square shaped.

7. Receiving device in accordance with any of the Claims 1, 2, 3, 4, 5 or 6, characterised in that, the receiving device (N) is formed as a drawer which can be retracted into the housing and extended out of the housing of the apparatus.

## Revendications

1. Dispositif de positionnement (N) pour un appareil d'enregistrement ou de reproduction pour le positionnement de disques (CD, M) de diamètres différents, présentant un renfoncement (V) pour positionner le disque (CD) de diamètre plus grand, dont le bord empêche le disque (CD) de diamètre plus grand de bouger, un évidement (AS) étant prévu au milieu du renfoncement (V), pour un support (L) abaissable, un disque (CD, M) étant amené dans la position de lecture par abaissement du support (L), et des supports (S) étant disposés sur le support (L) à la circonférence d'un cercle imaginaire dont le diamètre correspond au diamètre du disque plus petit (M), ces supports empêchant le disque plus petit (M) de bouger, et le disque plus grand (CD) reposant sur ceux-ci, caractérisé en ce que le support (L) est connecté mécaniquement au moyen d'un bras (AR) au dispositif de positionnement (N), que le bras (AR) est fixé en rotation au dispositif de positionnement (N) et au support (L), que le bras (AR) est poussé vers le bas pour faire descendre le support (L) et vers le haut pour lever le support (L), et que les supports (S) sont au nombre de trois au minimum.

2. Dispositif de positionnement selon la revendication 1, caractérisé en ce que le mouvement de levée et d'abaissement du support (L) est limité par les butées (A1, A2, A3).

3. Dispositif de positionnement selon l'une quelconque des revendications 1 ou 2, caractérisé en ce qu'un pivot (Z) du bras (AR) est guidé par une rainure de guidage (F) une crémaillère (ZS) s'étendant parallèlement au bras (AR).

4. Dispositif de positionnement selon la revendication 3, caractérisé en ce que la crémaillère (ZS) est déplacée au moyen d'une roue dentée entraînée par un moteur électrique.

5. Dispositif de positionnement selon l'une quelconque des revendications 1, 2, 3 ou 4, caractérisé en ce qu'un évidement (U) est prévu dans le support (L) pour l'entraînement du disque et le dispositif de lecture de l'appareil d'enregistrement et/ou de reproduction.

6. Dispositif de positionnement selon l'une quelconque des revendications 1, 2, 3, 4 ou 5, caractérisé en ce que le support (L) et l'évidement (AS) prévu dans le dispositif de positionnement pour ce support sont conçus avec une forme quadratique ou circulaire.

7. Dispositif de positionnement selon l'une quelconque des revendications 1, 2, 3, 4, 5 ou 6, caractérisé en ce que le dispositif de positionnement (N) est conçu comme un tiroir, que l'on peut tirer hors du boîtier de l'appareil et rentrer dans le boîtier.
